# EUROPEAN PATENT APPLICATION

(11) **EP 2 144 438 A1**
(43) Date of publication of application: **13.01.2010**
(21) Application number: 09251062.7
(22) Date of filing: 09.04.2009
(51) Int. Cl.: H04N 5/60, H04N 5/44

(54) **Television device with user interface**

(30) Priority: 07.07.2008 GB 0812428
(71) Applicant: Sony United Kingdom Limited, Weybridge, Surrey KT13 0XW (GB)
(72) Inventor: Dodd, Kevin Charles, Basingstoke, Hampshire RG22 4RF (GB)
(74) Representative: Smith, Samuel Leonard

(57) **Abstract**

A television device and a method of controlling the television device with a user interface. The television device has an output circuit for outputting audio and video signals and is operable in a normal mode outputting an audio signal and a video signal and in an audio descriptor mode outputting an audio signal additionally including an audio description of images contained in the video signal. The user interface has a plurality of actuable regions/buttons with respective user interface surfaces, the regions/buttons including at least one tactile region/button having a tactile identifier on its respective user interface surface. The television device is controlled to switch between the normal mode and the audio descriptor mode in response to the at least one tactile region/button being actuated in a predetermined way, such as for at least a predetermined time.

## Description

The present invention relates to a television device and a method of controlling such a television device with a user interface, in particular with regard to providing audio descriptor information for the visually impaired.

It is well known to provide, on mainly graphical devices, additional audio description to assist visually impaired users in either using or enjoying the use of those devices.

Broadcasters of television programmes already provide audio description for some of those programmes. The broadcasters broadcast television signals containing audio data and video data of corresponding audio/video sequences. For certain programmes, they additionally broadcast, with those television signals, supplementary audio data for audio description of respective audio/video sequences. Suitable receivers are able to receive the supplementary audio data as a second audio channel and selectively provide this supplementary audio data for reproduction such that users can be provided with an audio description of video sequences, in other words a narrative soundtrack which explains what is happening on the television screen.

Documents, such as US 6,795,011 also propose systems help modes in which an audio description is provided of respective function keys of a control device. For instance, when a respective button is held down for more than a predetermined time, the system determines that the user requires help information regarding that respective button. The help information may be provided as an audio description.

The present application recognises for the first time the relative difficulties experienced by a visually impaired user in switching a television device from a normal mode to a mode in which an audio description is provided of displayed images.

It is an object of the present invention at least to reduce the previous difficulties encountered by users.

According to the present invention, there is provided a method of controlling a television device with a user interface, the television device having an output circuit for outputting audio and video signals and being operable in a normal mode outputting an audio signal and a video signal and in an audio descriptor mode outputting an audio signal additionally including an audio description of images contained in the video signal and the user interface having an actuation area with a plurality of individually actuable regions and at least one tactile identifier identifying a corresponding tactile region, the method including:
controlling the television device to switch between the normal mode and the audio descriptor mode in response to the at least one tactile region being actuated in a predetermined way.

According to the present invention, there is also provided a television device including an output circuit configured to output audio and video signals for reproduction;
a controller configured to control at least the output device and configured to operate selectively in either a normal mode or an audio descriptor mode; and
a user interface having an actuation area with a plurality of individually actuable regions and at least one tactile identifier identifying a corresponding tactile region; wherein
in the normal mode, the controller controls the output circuit to output an audio signal and a video signal and, in the audio descriptor mode, the controller controls the output circuit to output the audio signal additionally including an audio description of images contained in the video signal; and
the controller is configured to switch between the normal mode and the audio descriptor mode in response to the at least one tactile region being actuated in a predetermined way.

The actuation area can be provided as a touch screen which displays virtual buttons at respective regions and the tactile identifier can be provided on the touch screen or nearby the respective region of the touch screen. Alternatively, of course, the actuation area may include, as the plurality of individually actuable regions, a plurality of actuable buttons with respective user interface surfaces, the buttons including at least one tactile button having a tactile identifier on its respective user interface surface.

A user is not required to understand or be familiar with the functions of any of the actuable buttons. Having found a button with a tactile identifier, it is sufficient for the user to actuate that button for the predetermined way in order to switch modes of the television device. The user is then immediately provided with the audio description that he/she needs to navigate or understand the information presented visually on a display.

Preferably, the predetermined way is at least one of for at least a predetermined time and being actuated in quick succession a plurality of times.

The nature of the images contained in the video signal can be graphical, for instance text, conveying information to the user or merely video sequences provided as entertainment.

The television device may be provided with a receiver configured to receive television signals containing audio data and video data of corresponding audio/video sequences and also containing supplementary audio data for audio description of respective audio/video sequences. In the audio descriptor mode, the controller may control the output circuit to output an audio signal formed from the audio data and the supplementary audio data. Reception can be from locally available pre-recorded data, from transmitted data such as for video-on-demand services, from IPTV or from broadcast data.

In this way, in the audio descriptor mode, the television device operates to provide for reproduction the narrative soundtrack provided with television programmes for the visually impaired. There is no need for the user to negotiate any complex menus or operate any buttons or functions particularly associated with the audio descriptor function. It is merely necessary for a user to identify a tactile button having a tactile identifier, namely a button in any case provided specifically for use by the visually impaired, in order to switch the television device to the audio descriptor mode.

The output circuit may additionally or alternatively be configured to output video signals including graphical user interface information for display. The audio description included in the audio signal may include an audio description of the content of the graphical user interface information.

In this way, the user may again easily be directly provided with any information, such as menu information, provided for display without previously having to negotiate any complex menus or functions.

In one embodiment, the graphical user interface information may include an electronic programme guide.

In the normal manner, the controller may be configured to control a plurality of functions of the television device other than switching between the normal mode and the audio descriptor mode. Control of these functions may be in response to actuation of the plurality of actuable buttons. The at least one tactile button thus, similarly, may be provided to operate one or more of these functions. In other words, the controller may be configured to control a respective one of the plurality of functions in response to actuation of the at least one tactile button other than in said predetermined way, for instance for no more than said predetermined time.

Thus, the user interface is not provided with any special button for switching between the modes. All of the plurality of buttons may have their own normal functions. However, if one or more of those buttons is provided with tactile identifiers and are tactile buttons, actuation of them in the predetermined way, for instance for at least a predetermined time, will cause switching of the modes.

Preferably, the controller is configured to control the output circuit to output, when the controller switches between the normal mode and the audio descriptor mode, an audio signal containing an audible confirmation of the switch of mode.

In this way, a visually impaired user easily recognises that operation of the tactile button has been recognised by the television device and that the mode has been switched as required.

The tactile identifier may take any form appropriate for identification by a user and might comprise at least one of a recess and a protrusion on the respective user interface surface.

The use of tactile identifiers on buttons is well known and the tactile identifier can be a standard identifier, for instance as defined in European Standard ES 201384.

In this way, the present invention can be embodied using a user interface of otherwise standard form with a tactile identifier on at least one button as proposed previously for assistance to the visually impaired.

The plurality of buttons may be push buttons which are actuable by pressing on respective user interface surfaces.

The plurality of buttons may be arranged in any known and conventional manner, for instance as a two-dimensional array. In this respect, it is known to provide an array of three-by-three buttons assigned to numerals 1 to 9 with the central button being a tactile button assigned to numeral 5.

Preferably, the present invention makes use of such an arrangement of buttons.

The user interface may be provided as a remote control device.

The television device may be provided for connection to a television display for reproducing video images and an audio transducer, for instance one or more loud speakers, for reproducing audio signals. Such a television device may be provided as a set-top box device.

Alternatively, the television device may itself include the audio transducer and television display.

Of course, implementation of the invention within the television device may be achieved, in practice, by means of software, such that the present invention also provides a computer program comprising program code means and a computer program product comprising program code means stored on a computer readable medium for performing the invention.

The invention will be more clearly understood from the following description, given by way of example only, with reference to the accompanying drawings, in which:
Figure 1 illustrates a television device embodying the present invention in a broadcast environment;
Figures 2(a) and (b) illustrate television devices embodying the present invention;
Figure 3 illustrates schematically functional parts of a television device embodying the present invention;
Figures 4(a) and (b) illustrate user interfaces for use with the present invention;
Figures 5(a) and (b) illustrate tactile deficiencies for use with the present invention; and
Figure 6 illustrates schematically a flow chart for operation of a television device of the present invention.

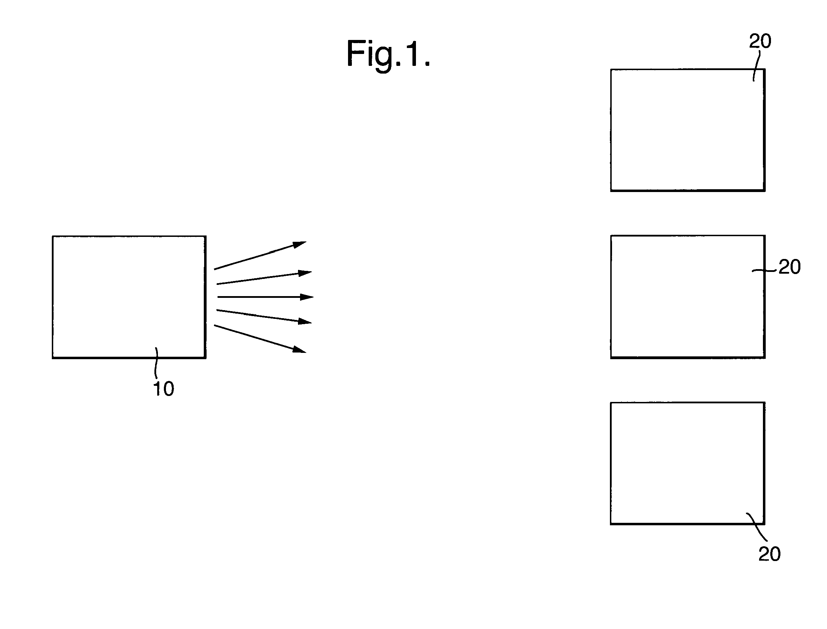

Although the present invention is applicable to any television device operable in a normal and audio descriptor mode, it is preferably embodied in a broadcast environment such as illustrated in Figure 1. As illustrated, a broadcaster 10 broadcasts television signals to a plurality of receiving television devices 20.

The television signals broadcast by the broadcaster 10 include audio data and video data corresponding to audio/video sequences of television programmes. They may also include other video data, such as data representing graphical images, for instance for an electronic program guide.

The broadcaster may include in the television signals additional data, such as supplementary audio data for providing audio description of images contained in the video signal. It is known to provide such supplementary audio data for providing an audio description of scenes occurring within a video sequence. Appropriate audio description can also be provided for graphical images, such as electronic program guides.

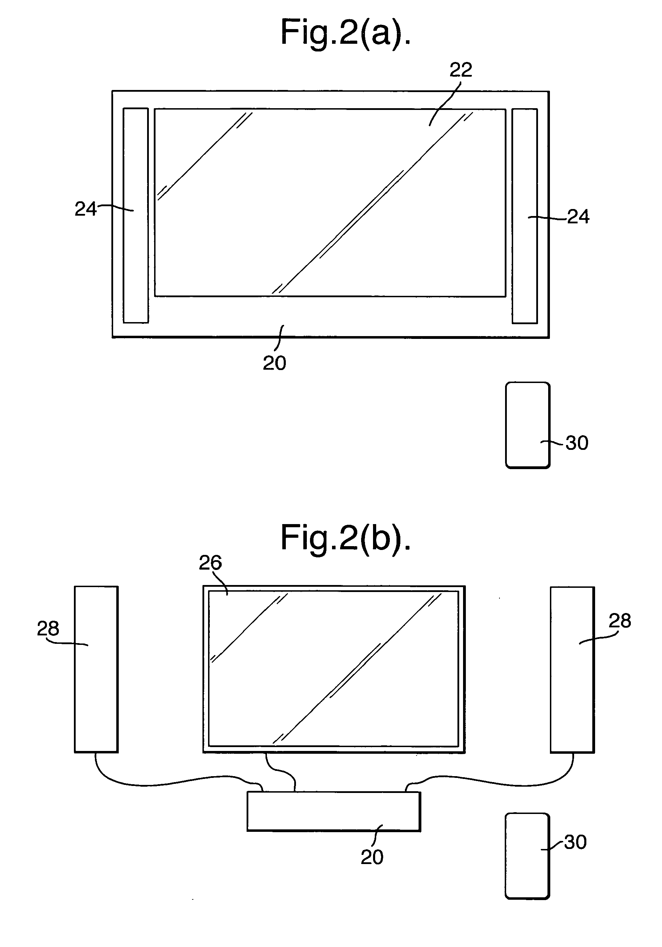

Figures 2(a) and (b) illustrate different respective television devices 20 which could embody the present invention. In the arrangement of Figure 2(a), the television device 20 itself includes a display 22 and a pair of loudspeakers 24 acting as an audio transducer.

In the example of Figure 2(b), the television device 20 takes the form of a set-top box which can be connected to a separate display 26 and separate loudspeakers 28 acting as an audio transducer.

In both examples, the television device 20 is provided with a user interface 30, for instance, as illustrated, in the form of a remote control device.

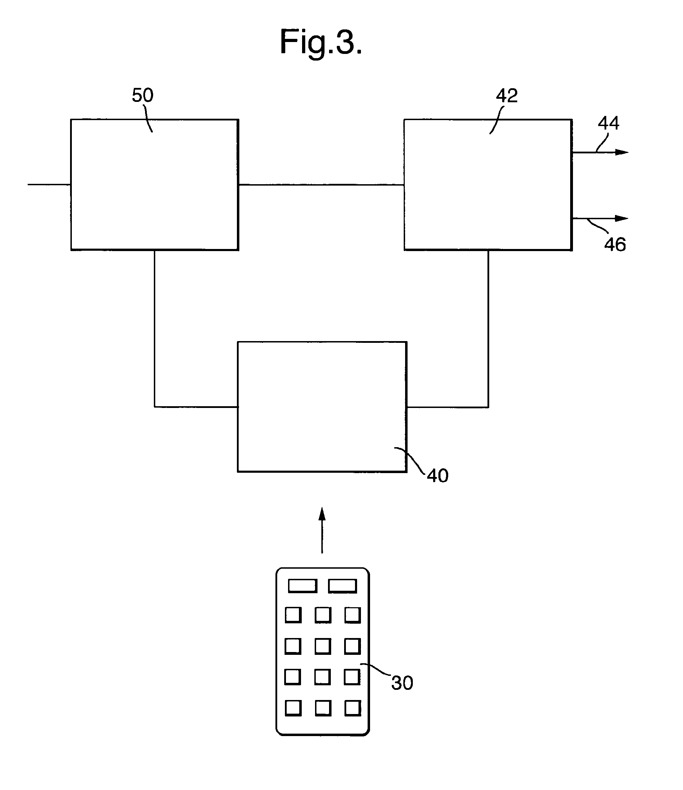

Figure 3 illustrates schematically relevant parts of a television device embodying the present invention.

A controller 40 is provided for controlling various functions of the television device, many of which, for the sake of simplicity, will not be discussed here, but correspond to standard or known features of television devices.

An output circuit 42 is provided for outputting video signals 44 and audio signals 46. Where the television device is embodied as a set-top box, such as illustrated in Figure 2(b), the audio and video signals may take any appropriate form for output and transmission to external display and audio transducer units. Alternatively, for an integrated television device such as illustrated in Figure 2(a) the output from the output circuit 42 may be appropriate for driving directly a display 22 and loudspeakers 24.

The video signal 24 will cause images to be displayed on either the display 22 or the display 26. These images could include internally generated graphics, such as text, for providing information to the user, for instance with regard to available functions of the television device. Alternatively, the images may be obtained from a receiver 50 connected to the output circuit 42. Video data received by the receiver 50 could similarly include graphical images, such as text presenting information, such as an electronic programme guide to the user. Additionally or alternatively, video data obtained by the receiver 50 could relate to moving images in the form of video sequences.

The term receiver is used here in a broad sense and is intended to encompass not only reception of television signals from a broadcaster, such as broadcaster 10 of Figure 1, but also reception of signals from other sources, such as from video-on-demand sources, possibly over closed networks, from IPTV or from locally recorded or prerecorded sources of video data.

In a normal mode of operation, the controller 40 of the television device causes the output circuit to output its normal video 44 and corresponding audio 46 signals.

However, the television device is also capable of operating in an audio descriptor mode in which the controller 40 controls the output circuit 42 to output an audio description of images contained in the video signal 44. The audio description could be provided in an audio signal completely separate to the normal audio signal and capable of being routed to a separate audio transducer. Alternatively, the audio description could be combined with the normal audio information and provided as part of a single audio signal output for reproduction.

Where the output circuit is configured to produce video images internally, it could additionally provide appropriate supplementary audio data for the audio description. However, more commonly, it is envisaged that the receiver 50 will receive supplementary audio data for the audio description of related video images, for instance a corresponding audio/video sequence.

The television device is capable of being switched between the normal mode and the audio descriptor mode of operation. This may be achieved by means of the user interface 30.

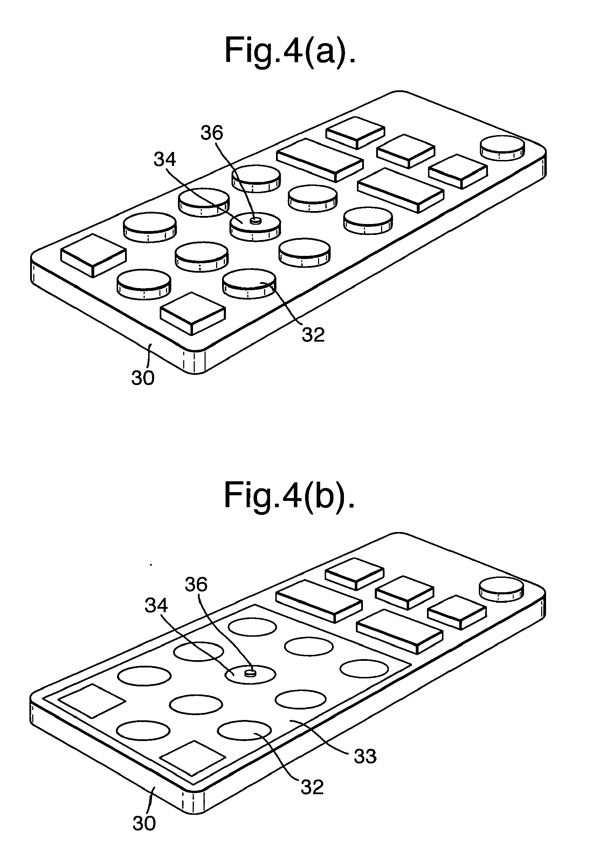

Figures 4(a) and (b) illustrate schematically examples of appropriate user interfaces 30. These may be known or conventional user interfaces, such as a remote control device having a plurality of actuable buttons 32. In the illustrated embodiment of Figure 4(a), these may be push buttons which are actuated by pushing. In the illustrated embodiment of Figure 4(b), the buttons 32 are provided as images of virtual buttons displayed on a touch screen 33.

Depending on the state of the television device at the time, each of the buttons 32 may have a particular respective function.

In a known manner, one or more of the buttons 32 of Figure 4(a) may be designated as a tactile button 34 by providing on its upper user interface surface a tactile identifier 36, such as a protrusion or recess. Similarly, a particular region of the touch screen 33 of Figure 4(b) may be designated as a tactile region 34 by providing a tactile identifier 36 on the upper user surface of the touch screen 33 or at an upper surface of the user interface 30 nearby that region 34.

It is well known, for instance in accordance with European Standard ES 201384, to provide on keypads buttons with tactile identifiers allowing users, particularly visually impaired users, to locate easily a button positioned at a known location within the two-dimensional array of buttons. For instance, in the three-by-three array of numeric keys found on keypads such as telephones, the central key designated for numeral 5 is provided with a tactile identifier.

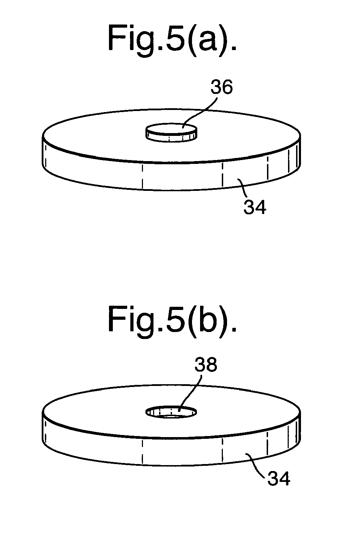

Figure 5(a) illustrates schematically a tactile button 34 having a protrusion 36 as a tactile identifier and Figure 5(b) illustrates a tactile button 34 having a recess 38 as the tactile identifier.

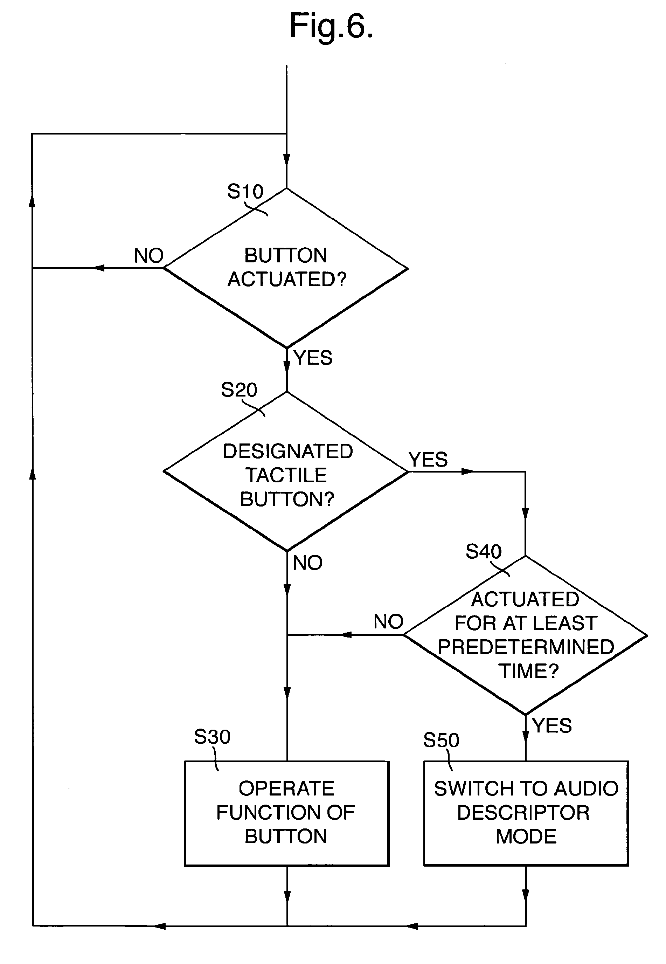

Figure 6 illustrates schematically, as a flow diagram, a process responsive to actuation of regions/buttons 32, 34 of the user interface 30, conducted by the controller 40, a controller within the user interface 30 or control components distributed between the television device and the user interface 30.

In step S 10, in a known or conventional manner, actuation of any of the regions/buttons of the user interface 30 is monitored. As illustrated, where no actuation is detected, the process merely cycles around the process step S 10.

According to known operating methods, no particular distinction is given to the tactile button. The tactile identifier on the tactile button is provided merely to assist the user in identifying that button in the overall array of buttons. Hence, in previous arrangements, having detected actuation of a button in step S10, the process would have jumped to step S30 to carry out any operational function associated with the actuated button.

According to the present invention, particular significance can be given to actuation of the region/button designated as the tactile region/button. Hence, as illustrated in Figure 6, the process includes an intermediate step S20 for determining whether or not the actuated region/button is the designated tactile region/button (or is one of the designated tactile regions/buttons where more than one is provided).

If the actuated region/button is not one of the designated tactile regions/buttons, then the process merely proceeds to step S30 in the normal manner. However, if the actuated region/button is one of the designated tactile buttons, as illustrated in Figure 6, the process proceeds to step S40.

In step S40 of this embodiment, the process determines whether or not the actuated tactile region/button was actuated for at least a predetermined time. The predetermined time may be pre-set in the device or could be chosen in advance by the user. Nevertheless, it is predetermined for the process.

For equivalent steps of other embodiments, it can be determined whether or not the actuated tactile region/button was actuated in another predetermined way pre-set or chosen to signify a mode change.

If the actuated region/button is detected to have been actuated in a normal manner and for a short period of time less than the predetermined time, then the process considers actuation of that region/button to have been normal actuation and returns to step S30. In this situation, the operation or function appropriate to that region/button is carried out, irrespective of the fact that it is a tactile region/button.

In contrast, if the process detects that the actuated tactile region/button was actuated for at least the predetermined time, then the process moves to step S50 and the mode of operation is switched to the audio descriptor mode as described above.

As illustrated, after either step S30 or step S50, the process can return to the cycling of step S10 while actuation of another button is awaited.

In this way, a standard user interface, such as a remote control device, can be used with the present invention so as to allow a user easily to switch to the audio descriptor mode without any detailed knowledge of menus or functions of the television device. The user merely has to find the tactile region/button identified by the tactile identifier, the tactile identifier having already been provided expressly for the purpose of allowing users, such as visually impaired users, to find it without difficulty. By actuating that region/button for a predetermined time, the television device is easily switched to the audio descriptor mode.

When the user interface 30 includes a controller configured to carry out the process of Figure 6, having established that the tactile region/button has been operated to switch modes, the user interface 30 can send an appropriate signal (for instance by means of infrared) to the television device to cause the television device to switch modes. On the other hand, if the controller 40 of the television device is configured to carry out the process, the controller 40 is responsive to an appropriately long signal from the user interface 30 as part of step S40.

Preferably, actuating the tactile region/button for at least a predetermined time acts, upon successive such actuations, to toggle the television device between its normal mode and its audio descriptor mode.

The length of the predetermined time is not essential to the invention, but it is suggested that it should be significantly longer than would typically be used for normal actuation and periods of one second or greater are preferred.

## Claims

1. A television device including:
an output circuit configured to output audio and video signals for reproduction;
a controller configured to control at least the output device and configured to operate selectively in either a normal mode or an audio descriptor mode; and
a user interface having an actuation area with a plurality of individually actuable regions and at least one tactile identifier identifying a corresponding tactile region; wherein
in the normal mode, the controller controls the output circuit to output an audio signal and a video signal and, in the audio descriptor mode, the controller controls the output circuit to output the audio signal additionally including an audio description of images contained in the video signal; and
the controller is configured to switch between the normal mode and the audio descriptor mode in response to the at least one tactile region being actuated in a predetermined way.

2. A television device according to claim 1 wherein the predetermined way is at least one of for at least a predetermined time and being actuated in quick succession a plurality of times.

3. A television device according to claim 1 or 2 further including:
a receiver configured to receive television signals containing audio data and video data of corresponding audio/video sequences and also containing supplementary audio data for audio description of respective audio/video sequences; wherein
in the audio descriptor mode, the controller controls the output circuit to output audio signals including the audio data and the supplementary audio data.

4. A television device according to claim 1, 2 or 3 wherein:
the output circuit is configured to output video signals including graphical user interface information for display and the audio description included in the audio signal includes an audio description of the content of the graphical user interface information, preferably including an electronic program guide.

5. A television device according to any preceding claim wherein:
the controller is configured to control a plurality of functions of the television device other than switching between the normal mode and the audio descriptor mode in response to actuation of said plurality of actuable regions and is configured to control a respective one of the plurality of functions in response to actuation of the at least one tactile region other than in said predetermined way.

6. A television device according to any preceding claim wherein:
the controller is configured to control the output circuit to output, when the controller switches between the normal mode and the audio descriptor mode, an audio signal contains an audible confirmation of the switch of mode.

7. A television device according to any preceding claim wherein the tactile identifier comprises at least one of a recess and a protrusion.

8. A television device according to any preceding claim wherein the actuation area includes, as the plurality of individually actuable regions, a plurality of actuable buttons with respective user interface surfaces, the buttons including at least one tactile button having a tactile identifier on its respective user interface surface.

9. A television device according to claim 8 wherein the tactile identifier is a standard identifier for instance as defined in European Standard ES 201384.

10. A television device according to claim 8 or 9 wherein said plurality of buttons are push buttons which are actuable by pressing on respective user interface surfaces.

11. A television device according to claim 8, 9 or 10 wherein the plurality of buttons include an array of three-by-three buttons assigned to numerals 1-9 and the central button in the said at least one tactile button and is assigned to numeral 5.

12. A television device according to any preceding claim wherein the user interface is a remote control device.

13. A television device according to any preceding claim wherein the television device is a set-top box device configured to provide audio and video signals to an audio transducer and a television display respectively.

14. A television device according to any one of claims 1 to 12 wherein the television device includes an audio transducer and a television display configured to reproduce the audio and video signals respectively.

15. A method of controlling a television device with a user interface, the television device having an output circuit for outputting audio and video signals and being operable in a normal mode outputting an audio signal and a video signal and in an audio descriptor mode outputting an audio signal additionally including an audio description of images contained in the video signal and the user interface having an actuation area with a plurality of individually actuable regions and at least one tactile identifier identifying a corresponding tactile region, the method including:
controlling the television device to switch between the normal mode and the audio descriptor mode in response to the at least one tactile region being actuated in a predetermined way.
